# EUROPÄISCHE PATENTANMELDUNG

(11) **EP 3 685 717 A1**
(43) Veröffentlichungstag der Anmeldung: **29.07.2020**
(21) Anmeldenummer: 20152962.5
(22) Anmeldetag: 21.01.2020
(51) Int. Cl.: A47J 37/07

(54) **TRANSPORT- UND PRÄSENTATIONSVORRICHTUNG FÜR GRILLROST-EINSÄTZE**

(30) Priorität: 25.01.2019 DE 202019100459 U
(71) Anmelder: Upgrate LLC, Newark, DE 19711 (US)
(72) Erfinder: Hahn, Bernd Felix, 55276 Oppenheim (DE)
(74) Vertreter: Mackert, Andreas

(57) **Zusammenfassung**

Die Erfindung betrifft eine Transport- und Präsentationsvorrichtung für Grillrost-Einsätze.

Es ist Aufgabe der Erfindung, eine Transport- und Präsentationsmöglichkeit zu schaffen, ohne das gegarte Grillgut umfüllen zu müssen.

Erreicht wird dies nach der Erfindung durch einen Grundkörper zur Aufnahme eines Grillrosteinsatzes, in dem zumindest eine Grillrost-Einsatz-Aufnahme entweder direkt oder in einem Einsatzring angeordnet ist, wobei der Grundkörper eine zentrale Vertiefung sowie zwei Handgriffe aufweist.

## Beschreibung

Die Erfindung betrifft eine Transport- und Präsentationsvorrichtung für Grillrost-Einsätze gemäß dem Oberbegriff des Anspruchs 1.

In der Regel ist es bei der Nutzung eines Grills so, dass das gegarte Grillgut beispielsweise auf eine Platte gelegt an den Tisch gebracht und serviert wird. Dies führt zu einem vergleichsweise schnellen Auskühlen des Grillguts, da häufig diese Platten nicht vorgewärmt werden und somit die Wärme des Grillguts direkt in beispielsweise das Porzellan abgeben wird, was die Abkühlung noch beschleunigt. Zudem handelt es sich bei dieser Form des Transports und der Präsentation von Grillgut um eine hinlänglich bekannte und wenig originelle Form der Präsentation. Zudem muss das Grillgut einzeln vom Grillrost abgenommen und auf der Präsentationsplatte angeordnet werden.

Darüber hinaus ist es aus dem Bereich der Gastronomie bekannt, beispielsweise pfannenartige gusseiserne Kochgeschirre direkt aus dem Ofen oder von einem Herd auf den Esstisch der Gäste zu platzieren. Hierbei wird in der Regel die gusseiserne Pfanne auf eine Warmhaltevorrichtung gestellt oder auf einem Holzbrett platziert. Hierdurch wird der Vorteil genutzt, dass eine Person dieser Pfanne portionsweise etwas entnehmen kann, der auf der Pfanne verbleibende Rest der Speise aber durch die in der gusseisernen Pfanne gespeicherte Hitze längere Zeit warm gehalten wird.

Zudem gibt es spezielle Vorrichtungen, die auch ein grillartiges Zubereiten von Speisen direkt am Tisch in der Gastronomie ermöglichen, was insbesondere der vorteilhaften Präsentation und somit der Unterhaltung der Gäste dient. Hier ist natürlich nachteilig, dass die Wärmeentwicklung am Esstisch vergleichsweise hoch ist und zudem, wie auch bei der Präsentation in einer Pfanne, die Gefahr besteht, dass sich Gäste an diesen Gegenständen verbrennen.

Bei der Gestaltung von Grillrosten ist es bekannt, den Grillrost aus verschiedenen Elementen zusammen zu setzen. Insbesondere hat es sich hier etabliert, bei einem Grillrost Einsätze vorzusehen, die in einen größeren Rost mit entsprechender Aufnahme einsetzbar sind. Das heißt, der beispielsweise rund, rechteckig oder auch anders geformt ausgebildete einsetzbare Grillrost-Einsatz wird in eine Aufnahme im Hauptrost eingesetzt und kann aus diesem Rost auch wieder entnommen werden. Hierbei weist der Grillrost-Einsatz in der Regel randständige Fortsätze auf, mit denen er in die Aufnahme des größeren Rostes aufgelegt wird. Alternativ können auch ein den Grillrost-Einsatz aufnehmender Rahmen oder andere Halteelemente im Hauptrost integriert sein.

Derart wurde ein Grillrost funktional erweitert, da sich dessen Grillrost-Einsatz gegen andere Grillmodule austauschen lässt. Der Grillrost-Einsatz lässt eine durchgehende Grillfläche entstehen oder alternative Nutzungen zu. So kann in die Aufnahme ein Pizzastein, ein Grillpfanneneinsatz, ein "Dutch-oven" oder auch gusseiserne "Sear Grates" zur Erzeugung eines klassischen Grillmusters auf dem Grillgut eingesetzt werden zu einer erweitert flexiblen Anwendung.

Vor diesem Hintergrund des Standes der Technik ist die Aufgabe der vorliegenden Erfindung, eine Transport- und Präsentationsvorrichtung für Grillrost-Einsätze zu schaffen, die einen originellen neuen Weg der Präsentation von Grillgut ermöglicht, gleichzeitig eine schnelle Entnahme des Grillguts vom Grillrost ermöglicht und zudem auch ein Warmhalten und Nachgaren des Grillguts realisiert. Gleichzeitig soll das Grillgut sicher transportiert und originell präsentiert werden können.

Erreicht wird dies durch eine Transport- und Präsentationsvorrichtung für Grillrost-Einsätze gemäß den Merkmalen des Anspruchs 1.

Die weiteren Ansprüche haben vorteilhafte Ausgestaltungen der Vorrichtung zum Gegenstand.

Die grundlegende Idee ist hierbei, nicht das Grillgut vom Grillrost abzuheben und auf einer Platte zu präsentieren sondern vielmehr den Grillrost-Einsatz selbst vom Grillrost abzuheben und komplett mit dem Grillgut zu transportieren und am Tisch zu präsentieren.

Die vorliegende Erfindung macht sich hierbei zu Nutze, dass wie ausgeführt bereits Grillroste am Markt vorhanden sind, die nicht vollständig einteilig ausgebildet sind, sondern bei denen in einem tragenden Grillrost zumindest ein entnehmbarer kleinerer Grillrost-Einsatz vorhanden ist. Dies erleichtert die Möglichkeit, diesen herausnehmbaren kleineren Grillrost-Einsatz in der Transport- und Präsentationsvorrichtung zu platzieren.

Die Transport- und Präsentationsvorrichtung weist hierbei zum einen einen Grundkörper auf, der der Aufnahme des Grillrostes sowie auch dem Transport dient, in dem der heiße Grillrost-Einsatz in diesen Grundkörper einsetzbar ist und gleichzeitig der Grundkörper die Hitze des Grillrost-Einsatzes auffängt und dabei aber transportabel bleibt. Hierfür sind grundsätzlich verschiedene Materialien geeignet, wobei ästhetisch zweckmäßigerweise zur Präsentation ein tablettartiger Grundkörper aus Holz besonders vorteilhaft ist.

Um nun im Grundkörper erfindungsgemäß den Grillrost-Einsatz aufnehmen zu können, ist hier eine zumindest den Durchmesser des Grillrost-Einsatzes aufnehmende Vertiefung zentral vorgesehen, über oder in die der zu transportierende Grillrost-Einsatz aufsetzbar ist.

Es ist hierfür vorgesehen, Grillrost-Einsatz-Aufnahmen um die an die Form des Grillrost-Einsatzes angepasste Vertiefung im Grundkörper der Vorrichtung so anzuordnen, dass Fortsätze, die am Grillrost-Einsatz randständig angeordnet sein können, seitlich der zentralen Vertiefung in diese Grillrost-Einsatz-Aufnahmen eingreifen können. Neben Fortsätzen kann auch ein speziell ausgebildeter Randbereich des Grillrost-Einsatzes vorliegen, so dass die Grillrost-Einsatz-Aufnahme zur Aufnahme dieses Randbereichs ausgebildet ist. Auf diese Weise wird realisiert, dass der dem Grillrost entnommene Grillrost-Einsatz sicher aufgenommen und gegen ein Verrutschen gesichert ist. Auch sollte die zentrale Vertiefung in Bezug auf ihre Außenkante den Maßen des aufzunehmenden Grillrost-Einsatzes entsprechend ausgebildet sein, um hier einen sicheren Halt im Grundkörper der Vorrichtung zu bewirken.

Eine vorteilhafte Ausgestaltung der Erfindung weist eine Auffangschale auf, die in die zentrale Vertiefung des Grundkörpers der Vorrichtung einsetzbar ist. Diese Auffangschale dient hierbei primär dazu, vom Grillgut sowie dem eingesetzten Grillrost-Einsatz tropfendes Fett und Fleischsaft aufzufangen und somit eine Verunreinigung der Vorrichtung zu vermeiden.

Grundsätzlich ist an dieser Stelle alternativ auch vorgesehen, die Auffangschale vor dem Einsetzen in den Grundkörper ebenfalls zu erhitzen, um hier eine Art Wärmespeicher in den Grundkörper unterhalb des Grillrost-Einsatzes einzusetzen, was zusätzlich der Warmhalte- und Nachgarfunktion dienlich ist.

Zudem kann vorgesehen sein, dass in die Auffangschale eingesetzt oder als Teil der Auffangschale ein speziell wärmespeicherndes Element vorgesehen ist, beispielsweise in der Art eines Pizzasteins. Auf diese Weise kann die Warmhalte- und Nachgarfunktion zusätzlich unterstützt werden.

Dieses Element kann auch unterhalb der Auffangschale in die zentrale Vertiefung einsetzbar sein, um vor Verunreinigungen durch das Grillgut geschützt zu sein. Es ist demnach zudem alternativ vorgesehen, auch unterhalb der Auffangschale noch einmal eine Beschichtung in der zentralen Vertiefung anzuordnen, um dem Grundkörper gegen die Hitzeeinwirkung des zusätzlichen wärmespeichernden Elements zu sichern.

Eine weitere alternative Bauform der Erfindung sieht vor, dass in der zentralen Vertiefung im Grundkörper ein Vorsprung mit Aufnahme oder auch lediglich eine Aufnahme angeordnet sind, die der Zentrierung einer in den Grundkörper eingesetzten Halterung beispielsweise für spezielle Grillwaren wie Brathähnchen oder ähnliches dient. Das heißt, diese Aufnahme kann nützlich sein, sollte etwas im Grundkörper in dessen Vertiefung eingestellt werden alternativ zum Grillrost-Einsatz.

Eine weitere zweckmäßige Bauform der Erfindung sieht vor, dass die im Grundkörper angeordneten Grillrost-Einsatz-Aufnahmen für Fortsätze am Grillrost-Einsatz nicht unmittelbar im Grundkörper angeordnet sind, sondern in einem Einsatzring, der in einer umlaufenden stufenartigen Vertiefung in der Oberseite des Grundkörpers der Vorrichtung angeordnet ist. Das heißt, der Grundkörper weist eine oberseitige ringförmige Vertiefung auf, die abgestimmt ist auf einen beispielsweise aus Edelstahl gefertigten Einsatzring, der wiederum entsprechende Grillrostaufnahmen an den Stellen aufweist, an denen der einzusetzende Grillrost über Vorsprünge verfügt.

Auf diese Art und Weise ist zusätzlich sichergestellt, dass nicht der Grundkörper unmittelbar durch die Hitze und die Verschmutzung des eingesetzten Grillrost-Einsatzes verunreinigt oder beschädigt wird, da der Einsatzring aus Material gefertigt ist, welches gut zu reinigen und hitzebeständig ist. Neben Edelstahl wäre hier beispielsweise auch Keramik denkbar oder ähnliche Werkstoffe, die hitzebeständig und gut zu reinigen sind.

Der Einsatzring eröffnet zudem auch eine Adapterfunktion mit Blick auf den variablen Grillrost-Einsatz. Es besteht die Möglichkeit, in der gleichbleibenden umlaufenden stufenartigen Vertiefung in der Oberseite des Grundkörpers verschiedene Einsatzringe zu nutzen, die in ihrer Außengeometrie konstant sind, in ihrer innenseitigen Aufnahme aber zu unterschiedlichen Grillrost-Einsätze passen. So ist es möglich, zum einen evtl. unterschiedliche Grillrost-Einsätze verschiedener Hersteller in der Vorrichtung zu platzieren oder auch die Einsatzringe an spezielle Anforderungen der verschiedenen Grillrost-Einsätze anzupassen.

Es ist ebenfalls bei einer Weiterentwicklung bei der erfindungsgemäßen Vorrichtung vorgesehen, dass oberhalb des Grillrost-Einsatzes auf die Vorrichtung eine glockenartige Abdeckung in Form einer Cloche aufgesetzt wird, die den Grillrost-Einsatz überspannend auf der Oberseite der Vorrichtung die Warmhalte- und Nachgarfunktion der Vorrichtung zusätzlich unterstützt.

Das heißt, nachdem ein Grillrost-Einsatz vom Grill abgehoben und in die Vorrichtung eingesetzt worden ist, kann durch Aufsetzten der Cloche erreicht werden, dass eine schnelle Auskühlung verhindert wird und durch das Zusammenwirken des heißen Grillrost-Einsatzes mit dem heißen Grillgut der unter der Cloche eingeschlossene Raum eine schnelle Aufwärmung erfährt und somit das Auskühlen des Grillguts sicher verhindert wird.

Um diese aufsetzbare Haube in Form einer Cloche gegen ein Abrutschen von der Oberseite der Vorrichtung zu sichern, ist eine ringförmige Einsetzstelle vorgesehen, die entweder direkt in die Oberseite der Vorrichtung entsprechend dem Umfang des Grillguts eingesetzt ist oder in dem eingesetzten Einsatzring randständig umlaufend angeordnet ist. Auf diese Weise wird die Cloche in Position gehalten und ist gegen eine unbeabsichtigte Verschiebung gesichert.

Diese Sicherung der Cloche gegen ein Abrutschen von der Oberseite der Vorrichtung kann entweder durch einen oder mehrere Vorsprünge erfolgen, welche von der Oberseite nach oben ragend angeordnet sind oder durch eine rinnenartige Vertiefung in der Oberseite des Grundkörpers der Vorrichtung oder im Einsatzring. Hierbei kann zudem vorgesehen sein, dass eine Abflussverbindung zwischen der aufsitzenden Cloche und der Auffangschale derart angeordnet ist, dass Kondenswasser, welches sich an der Innenseite der Cloche niederschlägt in die Auffangschale abgeführt wird.

Eine vorteilhafte Ausführungsform der Erfindung sieht zudem die Integration eines Schneidbrettes vor. Dieses kann hierbei alternativ entweder als oberseitiger Einsatz in eine beispielsweise Vertiefung oder Haltemittel auf der Cloche platziert sein. Hier böte dies die Option, das Schneidbrett leicht entnehmen und reinigen zu können.

Alternativ oder ergänzend hierzu könnte ein Schneidbrett auch die Unterseite des Grundkörpers der Vorrichtung selbst bilden, sodass der tablettartige Grundkörper der Vorrichtung durch ein Wenden und ein Absetzen auf der Oberseite mit der schneidbrettartig gestalteten Unterseite nach oben Verwendung finden kann.

Hierbei ist vorteilhafterweise in beiden Varianten eine Auffangrinne umlaufend angeordnet. In dieser Vertiefung kann beispielsweise Fleischsaft aufgefangen werden, wenn ein zuvor gegrilltes Grillgut am Tisch zerteilt wird.

Es ist hierbei grundsätzlich festzustellen, dass die Form und Gestaltung des Grillrost-Einsatzes variabel erfolgen kann. Über die Aufnahmen im Grundkörper oder auch die Aufnahmen im Einsatzring im Grundkörper ist eine flexible Anpassung der Vorrichtung an unterschiedliche Grillrost-Einsätze möglich sowohl was deren Abmaße als auch grundlegende Form rechteckig, rund oder andersförmig anbetrifft.

Im Folgenden wird die Erfindung anhand von Zeichnungen näher erläutert.

Es zeigen
- Figur 1: ein oberseitig in eine Cloche einsetzbares Schneidbrett 13;
- Figur 2: eine Cloche 10 zum Aufsetzen auf die Vorrichtung;
- Figur 3: ein Einsatzring 7 zum Aufsetzen auf die Vorrichtung;
- Figur 4: eine Auffangschale 5 zum Einsetzen in die Vertiefung 16 des Grundkörpers 1;
- Figur 5: den Grundkörper 1 der Vorrichtung mit zentraler Vertiefung 16;
- Figur 6: eine schmalere Ausbildung einer Cloche 10 zum Aufsetzen auf den Grundkörper 1;
- Figur 7: ein alternativ aufgebauter Einsatzring 7 mit Aufsetzkante 17 zum Aufsetzen der Cloche 10;
- Figur 8: eine perspektivische Darstellung des Grundkörpers 1 der Vorrichtung ohne Einsatzring 7 sowie
- Figur 9: eine unterseitige Darstellung des Grundkörpers 1 mit Ausbildung als Schneidbrett 13.

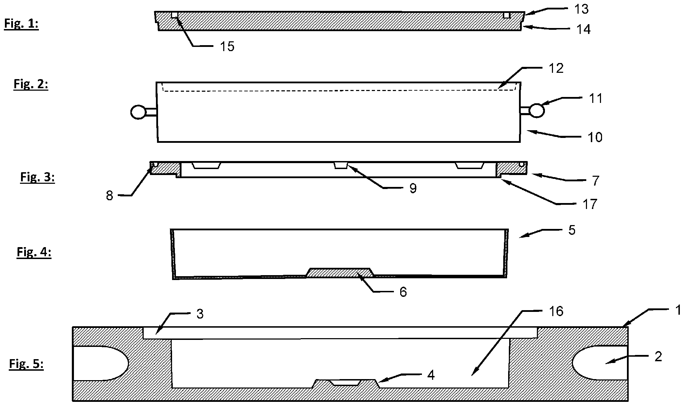

Da es sich bei den Figuren 1 bis 5 um eine Explosionszeichnung der gesamten Vorrichtung in einer bestimmten Ausführungsform handelt, wird im Folgenden auf alle fünf Figuren Bezug genommen.

In Figur 5 zeigt sich der Grundkörper 1 der Vorrichtung mit seitlichen Griffmulden 2 um die Vorrichtung tablettartig tragen zu können. Material hierfür könnte beispielsweise Holz sein.

Es handelt sich bei diesem Grundkörper der Figur 5 um eine Ausführung mit einer umlaufenden stufenartigen Vertiefung drei auf der Oberseite des Grundkörpers 1. Diese Aufnahme dient dem Einsetzen eines Einsatzrings 7, wie dieser in Figur 3 dargestellt ist.

Zudem ist erkennbar die mittig angeordnete zentrale Vertiefung 16 die der Aufnahme der Auffangschale 5 dient, wie diese in Figur 4 beispielhaft dargestellt ist. Es ist hierbei zudem erkennbar, dass eine unterseitige Aussparung 6 in der Auffangschale 5 besteht, die über einen Vorsprung 4 mit zentraler Aufnahme in der Vertiefung 16 des Grundkörpers gesetzt wird. Das heißt, die Auffangschale 5 weist bei dieser Ausführungsform eine Aussparung 6 aus, um flach am Boden der Vertiefung 16 anliegen zu können. Alternativ wäre auch möglich, hier die Auffangschale unterseitig eben auszubilden und einfach etwas flacher zu gestalten.

Die zentral angeordnete Aufnahme 4 in der Vertiefung 16 des Grundkörpers 1 ist dazu geeignet, in diese Vertiefung 16 eingesetzte Komponenten zu justieren und zu halten. Hierbei kann beispielsweise eine zeichnerisch nicht dargestellte Halterung für ein Grillhähnchen oder ähnliches so in die Vertiefung 16 eingestellt werden, dass sie unterseitig in die Aufnahme 4 eingreift und somit nicht innerhalb der Vertiefung 16 sich verschieben kann.

Weiterhin wäre eine Alternative, die Vertiefung 16 als Durchbrechung auszubilden und die Auffangschale 5 beispielsweise durch einen konischen Verlauf der seitlichen Wandungen der Auffangschale 5 und/oder der Vertiefung 16 in dieser Durchbrechung zu platzieren. Auch sind alternativ Haltekörper möglich, die die Auffangschale 5 in der durchbrochenen Vertiefung 16 halten. Diese Alternativen sind zeichnerisch nicht dargestellt.

Der in Figur 3 dargestellte Einsatzring 7 ist hierbei in Figur 3 in einer Bauform dargestellt, die eine ebene Oberseite aufweist und eine unterseitige Kante 17, die den Einsatzring7 zusätzlich in der Vertiefung 16 des Grundkörpers 1 sichert.

Nicht zeichnerisch dargestellt sind eventuell zusätzlich Haltenasen an der Unterseite des Einsatzringes 7, die in entsprechende Aufnahmen in der Vertiefung 3 des Grundkörpers 1 derart eingreifen, dass die Position des Einsatzrings gegen eine Rotation gesichert ist und der Einsatzring nur so in die Vertiefung 3 einsetzbar ist. Dies sind allerdings keine zwingenden technischen Elemente sondern lediglich fakultative.

Der Einsatzring 7 weist zudem Grillrost-Einsatz-Aufnahmen 9 auf, die dazu dienen, Fortsätze am Grillrost-Einsatz aufzunehmen, sofern diese am Grillrost-Einsatz vorliegen.

Schließlich weist die dargestellte Bauform der Figur 3 eine ringförmige Einsatzrille 8 auf, die der Aufnahme der Unterkante der Cloche 10 dient, die in Figur 2 oberhalb des Einsatzrings 7 dargestellt ist. Hintergrund ist, dass auf diese Weise die Cloche 10 fest in diese ringförmige Einsatzrille 8 eingesetzt ist und nicht in horizontaler Ebene auf der Oberseite des Grundkörpers 1 beziehungsweise des Einsatzrings 7 verschiebbar ist. Auch kann hier ein nicht dargestellter Kanal zur Abfuhr von Kondenswasser in die Auffangschale 5 angeordnet sein, sodass Kondenswasser welches an der Innenseite der Cloche 10 abperlt über diese Einsatzrille 8 und einen entsprechenden Abfuhrkanal in die Auffangschale 5 abgeleitet wird.

In der dargestellten Bauform handelt es sich sowohl bei der Auffangschale 5 wie auch bei der aufgesetzten Cloche 10 um einen in etwa zylindrischen Körper, wobei seitlich an der Cloche 10 Haltegriffe 11 angeordnet sind, um die sich erwärmende Cloche 10 sicher halten zu können.

Schließlich weist die Cloche 10 oberseitig eine Schneidbrettaufnahme 12 auf, in die das in Figur 1 dargestellte Schneidbrett 13 einsetzbar ist. In der dargestellten Bauform ist hierfür eine stufenartige Verjüngung 14 des Schneidbretts 13 unterseitig angeordnet, mit der das Schneidbrett 13 in die Schneidbrettaufnahme 12 in der Oberseite der Cloche 10 einsetzbar ist.

Schließlich ist in Figur 1 auch eine Auffangrille 15 im Schneidbrett 13 dargestellt, die der Abfuhr beziehungsweise dem Auffangen von Fleischsäften beim Aufschneiden des Grillguts auf dem Schneidbrett 13 dient.

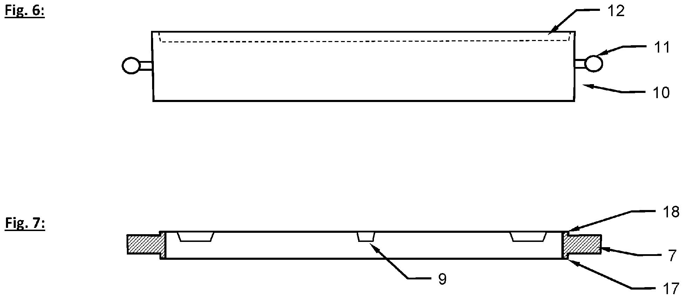

Die Figuren 6 und 7 zeigen in der Zusammenschau eine alternative Bauform insbesondere des Einsatzrings 7. Hierbei weist der Einsatzring neben der unteren Kante 17 auch eine obere Kante 18 auf, die dazu dient, ein Aufsetzen der Cloche 10 zu sicher. Das heißt, die Cloche ist geringfügig breiter ausgebildet in ihrem Durchmesser als der Durchmesser des Einsatzrings 7 im Bereich der oberen Kante 18 und somit kann die Cloche 10 über diese obere Kante 18 gestülpt auf den Einsatzring 7 aufgesetzt werden. Hierdurch wird analog zur zuvor beschriebenen Einsatzrinne 8 auch hier ein horizontales Verschieben der Cloche 10 auf dem Einsatzring 7 sicher vermieden. Auch hier kann ein Ablauf für Kondensflüssigkeit in die Auffangschale 5 Teil des Einsatzringes 7 sein.

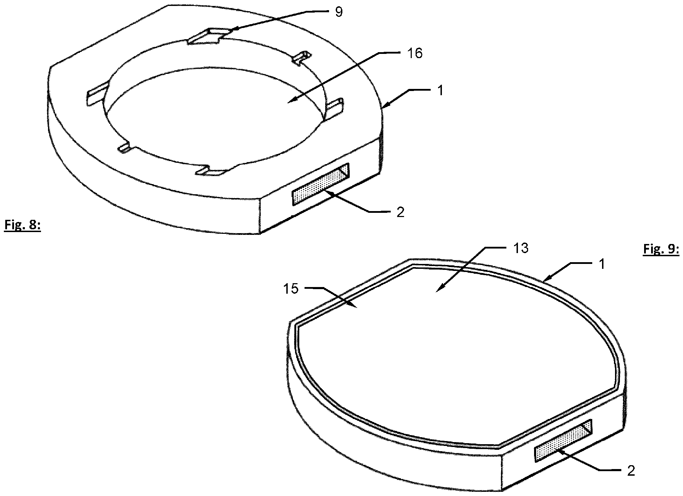

Schließlich zeigen die Figuren 8 und 9 den Grundkörper 1 in zwei perspektivischen Ansichten. Figur 8 zeigt eine oberseitige perspektivische Ansicht einer Bauform des Grundkörpers 1 ohne Einsatzring 7. Hierbei sind die zuvor genannten Grillrost-Einsatz-Aufnahmen 9 direkt in den Grundkörper 1 eingefräst, beispielsweise in einen Holzkörper. Diese Grillrost-Einsatz-Aufnahmen 9 sind hierbei orientiert am Grillrost-Einsatz eventuell vorhandenen Fortsätzen.

Zentral ist auch hier eine Vertiefung 16 angeordnet, in die wie zuvor beschrieben eine Auffangschale 5 eingesetzt werden kann. Nicht dargestellt sind eventuell ebenfalls in diese zentrale Vertiefung 16 einsetzbare zusätzliche Wärmespeichernde Elemente, beispielsweise ein bereits im Grill mit vorgeheizter wärmespeichernder Steinkörper, der dann in diese zentrale Vertiefung eingesetzt werden kann, um die Warmhalte- und Nachgarfunktion weiter zu unterstützen.

Zudem sind seitlich im Grundkörper 1 Eingriffe 2 zum Tragen der Vorrichtung in Form eines Tabletts vorgesehen.

Schließlich zeigt Figur 9 die Unterseite des Grundkörpers nach Figur 8. Hier soll lediglich dargestellt werden, dass die Unterseite des Grundkörpers 1 ebenfalls als Schneidbrett 13 ausgebildet sein kann, um bei Nichtnutzung der Vorrichtung für Transport und Präsentation eine alltagstaugliche Anwendung für die Vorrichtung zu haben. Auf diese Weise kann die Vorrichtung einfach gewendet werden und alltäglich als Schneidbrett 13 Verwendung finden. Hierfür ist es vorteilhafter Weise auch bei dieser Ausführung eine umlaufende Rinne 15 für Fleischsäfte und andere Flüssigkeiten vorgesehen.

### Bezugszeichenliste:

- 1: Grillrosttablett
- 2: seitliche Eingriffe
- 3: umlaufende stufenartige Vertiefung
- 4: Vorsprung mit Aufnahme
- 5: Auffangschale
- 6: Aussparung, unterseitig
- 7: Einsatzring
- 8: ringförmige Einsetzrille
- 9: Grillrost-Einsatz-Aufnahmen
- 10: Glockenförmige Abdeckung
- 11: Handgriffe
- 12: Schneidbrettaufnahme
- 13: Schneidbrett
- 14: stufenartige Verjüngung
- 15: Auffangrille, umlaufend
- 16: zentrale Vertiefung
- 17: Untere Kante
- 18: Obere Kante

## Patentansprüche

1. Transport- und Präsentationsvorrichtung für Grillrost-Einsätze
**gekennzeichnet durch**
- einen Grundkörper (1) zur Aufnahme eines Grillrost-Einsatzes
- in dem zumindest eine Grillrost-Einsatz-Aufnahme (9) entweder direkt oder in einem Einsatzring (7) angeordnet ist,
- wobei der Grundkörper (1) eine zentrale Vertiefung (16) in etwa in Größe des einsetzbaren Grillrost-Einsatzes
- sowie Handgriffe oder Eingriffe (2) aufweist.

2. Transport- und Präsentationsvorrichtung für Grillrost-Einsätze nach Anspruch 1
**dadurch gekennzeichnet, dass**
in die zentrale Vertiefung (16) eine Auffangschale (5) lösbar eingesetzt ist.

3. Transport- und Präsentationsvorrichtung für Grillrost-Einsätze nach Anspruch 1 oder 2,
**dadurch gekennzeichnet, dass**
in der zentralen Vertiefung (16) mittig ein Vorsprung und/ oder eine Aufnahme (4) angeordnet sind.

4. Transport- und Präsentationsvorrichtung für Grillrost-Einsätze nach Anspruch 3,
**dadurch gekennzeichnet, dass**
die Auffangschale (5) unterseitig eine Aussparung (6) aufweist zur Aufnahme des Vorsprungs (4) in der Vertiefung (16) .

5. Transport- und Präsentationsvorrichtung für Grillrost-Einsätze nach einem der vorangegangenen Ansprüche 2 bis 4,
**dadurch gekennzeichnet, dass**
in der Auffangschale (5) oder unter der Auffangschale (5) ein zusätzliches Wärmespeicheraggregat eingesetzt ist.

6. Transport- und Präsentationsvorrichtung für Grillrost-Einsätze nach einem der vorangegangenen Ansprüche,
**dadurch gekennzeichnet, dass**
- der Einsatzring (7) Grillrost-Einsatz-Aufnahmen (9) aufweist, sowie eine untere Kante (17) zum Eingriff in die Vertiefung (16),
- wobei eine weitere umlaufende stufenartige Vertiefung (3) oberseitig in dem Grundkörper (1) so ausgebildet ist, dass der Einsatzring (7) in diese weitere Vertiefung (3) passgenau einfügbar ist.

7. Transport- und Präsentationsvorrichtung für Grillrost-Einsätze nach einem der vorangegangenen Ansprüche,
**dadurch gekennzeichnet, dass**
der Einsatzring (7) eine obere Kante (18) aufweist.

8. Transport- und Präsentationsvorrichtung für Grillrost-Einsätze nach einem der vorangegangenen Ansprüche
**dadurch gekennzeichnet, dass**
eine die Vorrichtung abdeckende Cloche (10) auf den Grundkörper (1) aufsetzbar ausgebildet ist.

9. Transport- und Präsentationsvorrichtung für Grillrost-Einsätze nach Anspruch 8,
**dadurch gekennzeichnet, dass**
Haltemittel zur Fixierung der Cloche (10) in Form von ringförmigen Einsatzrillen (8) oder oberen Kanten (18) auf dem Grundkörper (1) oder dem Einsatzring (7) angeordnet sind.

10. Transport- und Präsentationsvorrichtung für Grillrost-Einsätze nach Anspruch 8 oder 9,
**dadurch gekennzeichnet, dass**
die Cloche (10) oberseitig eine Schneidbrettaufnahme (12) aufweist, in die ein Schneidbrett (13) einsetzbar ist.

11. Transport- und Präsentationsvorrichtung für Grillrost-Einsätze nach Anspruch 10,
**dadurch gekennzeichnet, dass**
das Schneidbrett (13) eine unterseitige stufenartige Verjüngung (14) aufweist, mit der das Schneidbrett (13) in die Schneidbrettaufnahme (12) der Cloche (10) eingesetzt ist.

12. Transport- und Präsentationsvorrichtung für Grillrost-Einsätze nach Anspruch 10 oder 11,
**dadurch gekennzeichnet, dass**
das Schneidbrett (13) eine umlaufende Auffangrille (15) aufweist.

13. Transport- und Präsentationsvorrichtung für Grillrost-Einsätze nach einem der vorangegangenen Ansprüche,
**dadurch gekennzeichnet, dass**
die Vertiefung (16) als Durchbrechung des Grundkörpers (1) ausgebildet ist, in die eine Auffangschale (5) lösbar eingesetzt ist.

14. Transport- und Präsentationsvorrichtung für Grillrost-Einsätze nach einem der vorangegangenen Ansprüche,
**dadurch gekennzeichnet, dass**
- die Grillrost-Einsätze rund, rechteckig oder andersförmig ausgebildet sind,
- wobei neben rostartigen Grillrost-Einsätzen auch spezielle Funktionseinsätze in Form von Pizzasteinen, Grillpfanneneinsätzen, Sear Grates, Dutch-oven und weitere Funktionseinsätze aufgenommen werden können.
